# EUROPEAN PATENT APPLICATION

(11) **EP 4 227 688 A1**
(43) Date of publication of application: **16.08.2023**
(21) Application number: 23154248.1
(22) Date of filing: 31.01.2023
(51) Int. Cl.: G01P 1/02, G01D 11/24

(54) **WHEEL SPEED SENSOR**

(30) Priority: 14.02.2022 CN 202220289921 U
(71) Applicant: Robert Bosch GmbH, 70442 Stuttgart (DE)
(72) Inventor: WANG, Qian, Suzhou, Jiangsu, 215021 (CN); YUAN, Hao, Suzhou, Jiangsu, 215021 (CN); LIU, Kun, Suzhou, Jiangsu, 215021 (CN); LI, Jinyang, Suzhou, Jiangsu, 215021 (CN)
(74) Representative: Isarpatent

(57) **Abstract**

The present application relates to a wheel speed sensor, comprising: one or more sensor chips (30) each having a pair of pins (34); electrical terminals (40) arranged in pairs, each pair of the electrical terminals being electrically connected to the pair of pins (34) of one of the sensor chips (30); a support (60) attached to a first end (44) of each electrical terminal (40); an end portion holder (55) adjacent to the support member (60) and attached to each electrical terminal (40) to prevent displacement of each electrical terminal (40) relative to each other; and at least one intermediate holder (65) attached to a body portion (42) of each electrical terminal (40) to prevent displacement of the body portion (42) of each electrical terminal relative to each other.

## Description

### TECHNICAL FIELD

The present utility model relates to the technical field of sensors, and relates in particular to a wheel speed sensor.

### BACKGROUND

An automotive vehicle is typically equipped with a wheel speed sensor (WSS) for detecting a vehicle rotational speed, which can be configured on a device or system on the vehicle, such as an automotive electronic stability program (ESP), an anti-lock braking system (ABS), a control system of an automatic transmission, a power system or the like, to provide vehicle wheel speed information. While many types of wheel speed sensors are provided in the prior art, these existing wheel speed sensors still have some defects and disadvantages in terms of structural construction, manufacturing processes, use cost control, signal redundancy implementation, reliability or the like.

For example, for a wheel speed sensor comprising elongated electrical terminals, the respective electrical terminals are typically formed as a whole first and then cut into separate electrical terminals, and the electrical terminals are then welded to pins of a sensor chip. Since each electrical terminal is relatively long, deflection or relative displacement may easily occur, and have an adverse effect on the precision or accuracy of signal transmission of the wheel speed sensor.

### SUMMARY

The purpose of this utility model is to provide a wheel speed sensor with an improved structure.

To this end, the present application provides a wheel speed sensor, comprising a sensor housing and a sensor body assembly located inside the sensor housing, the sensor body assembly comprising:
one or more sensor chips, each sensor chip comprising a pair of pins spaced apart in a transverse direction; one or more pairs of electrical terminals, each pair of electrical terminals being electrically connected to the pair of pins of the each sensor chip, each electrical terminal comprising an elongated body portion extending in a longitudinal direction perpendicular to the transverse direction and a first end electrically connected to a corresponding pin; a support attached to a first end of each electrical terminal, defining a recess for mounting each of the one or more sensor chips, and providing support for a connection portion between the pin of the sensor chip and the first end of the electrical terminal; an end portion holder adjacent to the support and attached to each electrical terminal to prevent displacement of each electrical terminal relative to each other; and at least one intermediate holder attached to the body portion of each electrical terminal to prevent displacement of the body portion of each electrical terminal relative to each other.

In one embodiment, the end portion holder is integrally formed with or spaced apart from the support, and/or the at least one intermediate holder comprises only one intermediate holder or comprises a plurality of intermediate holders spaced apart in the longitudinal direction L.

In one embodiment, the end portion holder and/or intermediate holder have an oval or polygonal outer profile when viewed in a cross section perpendicular to the longitudinal direction, and respectively comprise through holes allowing the respective electrical terminals to pass through, and when viewed in a cross section perpendicular to the transverse direction, each of the through holes completely surrounds a corresponding electrical terminal or only wraps a portion of the corresponding electrical terminal.

In one embodiment, the intermediate holder comprises two halves disposed opposite to each other, the through hole being defined collectively by the two opposite halves.

In one embodiment, the end portion holder and support are overmolded onto the first end of the one or more pairs of electrical terminals, the intermediate holder is overmolded onto the body portion, and the sensor housing is overmolded onto the sensor body assembly.

In one embodiment, the support comprises a chip mounting portion defining the recess, a support portion providing the support, and an intermediate portion connected between the chip mounting portion and the support portion, the intermediate portion comprises a pair of channels allowing the pair of pins of each sensor chip to pass through, and a spacer portion for spacing apart the pair of pins and fixing the pair of pins in place is arranged between the pair of channels for each sensor chip.

In one embodiment, the spacer portion is configured such that after the pin of the sensor chip is installed in the channel, the spacer portion is deformed or broken by force and/or heat so as to hold the pin in place.

In one embodiment, the spacer portion comprises two arms extending, in a bending or linear manner, from a sidewall defining the channel, or is configured to be a single block or arm extending from the sidewall defining the channel.

In one embodiment, the support further comprises lugs extending in the transverse direction from two opposite sides of the support portion respectively, the lugs passing through the sensor housing and extending to the outside of the wheel speed sensor.

In one embodiment, the lug comprises a sealing flange extending outwardly from the lug in a plane perpendicular to the transverse direction.

The wheel speed sensor of the present application comprises one or more sensor chips each having two pins, and electrical terminals electrically connected to the pins of the sensor chip, each of the electrical terminals having an elongated shape. The wheel speed sensor further comprises an end portion holder arranged near the weld end of each elongated electrical terminal, to increase the intensity near the weld end of the electrical terminal during a welding operation between the weld end of the electrical terminal and the pin of the sensor chip. The wheel speed sensor further comprises at least one intermediate holder configured to maintain the body portion of each electrical terminal stationary relative to each other. No relative displacement occurs between the elongated body portions of the respective electrical terminals, thereby facilitating the precision or accuracy of signal transmission of the wheel speed sensor.

### BRIEF DESCRIPTION OF THE DRAWINGS

Fig. 1 is an outside perspective view of the wheel speed sensor according to the present utility model;
Fig. 2 is a perspective view of the sensor body assembly after removal of the sensor housing;
Fig. 3 is a partial enlarged view of Fig. 2, illustrating the support and the end portion holder of the wheel speed sensor; and
Figs. 4a-4c are schematic views of some steps in the process of forming the sensor body assembly.

### DETAILED DESCRIPTION

The wheel speed sensor of the present utility model is described in detail below with reference to the figures.

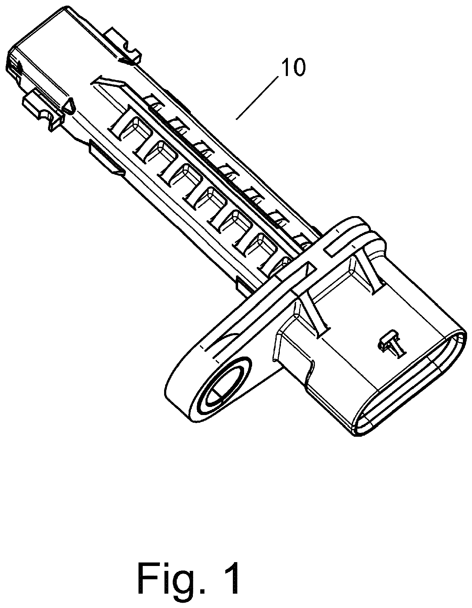

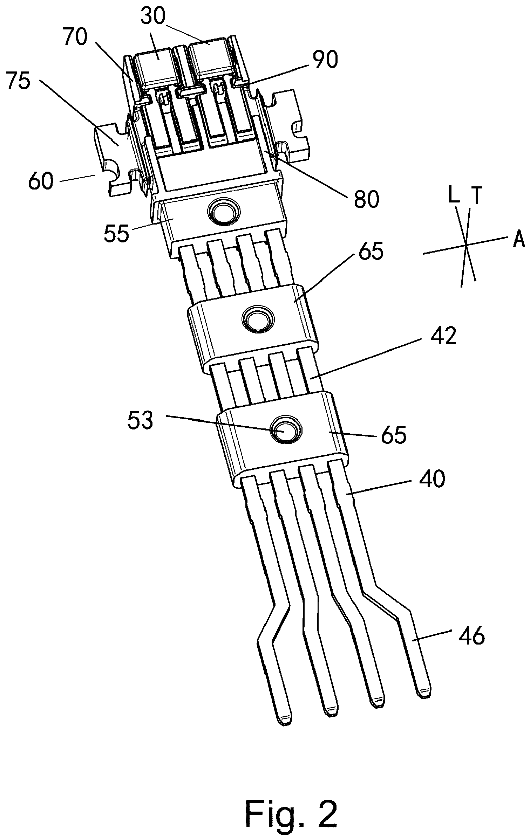

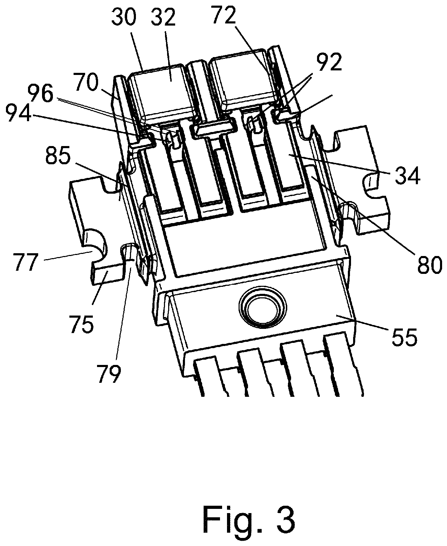

Reference is first made to Fig. 1, which shows a perspective view of the wheel speed sensor according to the present utility model. The wheel speed sensor of the present application comprises a sensor housing 10 and a sensor body assembly located inside the sensor housing 10. Referring to Figs. 2 and 3, the sensor body assembly includes one or more (e.g., two as shown in the figure) sensor chips 30, electrical terminals 40 electrically connected (e.g., soldered) to the sensor chips 30, an intermediate holder 65, an end portion holder 55, and a support 60.

All electrical elements used to measure a vehicle wheel speed are integrally integrated in the sensor chips 30. In the illustrated embodiment, the wheel speed sensor includes two sensor chips 30 to meet redundant requirements for wheel speed information in some applications. But wheel speed sensors provided with one sensor chip 30 or more than two sensor chips 30 are certainly also within the scope of protection of the present application. To perform signal interaction or to receive electrical energy or the like, each sensor chip 30 includes a chip body 32 and one or more pins 34 extending from the chip body 32 (Fig. 3). For example, in the illustrated embodiment, one sensor chip 30 is provided with two pins 34 for interacting with the outside environment by means of input signals or output signals.

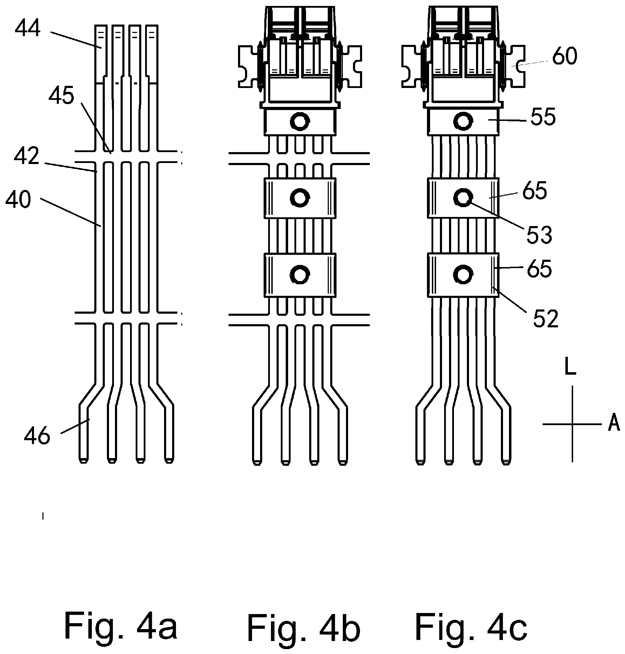

Correspondingly, the electrical terminals 40 are also arranged in pairs, and each pair of the electrical terminals 40 is electrically connected to the two pins 34 of one sensor chip 30, one of the pair of the electrical terminals 40 providing power to a corresponding sensor chip 30, and the other one transmitting a sensing signal of the sensor chip 30 to a vehicle body wire harness end (not shown). Referring to Figs. 4a-4c, each electrical terminal 40 includes a body portion 42 extending generally in a longitudinal direction L and a first end 44 and a second end 46 opposite to each other. The first end 44 may be a sheet-shaped end and is configured to be electrically connected to the pin 34 of the sensor chip 30, and the second end 46 may also be a sheet-shaped end and is configured to be electrically connected to a port of the vehicle body wire harness end. The respective sensor chips 30, the respective pins 34 extending from the sensor chips 30 toward the electrical terminals 40, and the respective electrical terminals 40 are all spaced apart from each other in a transverse direction A (Fig. 4C) perpendicular to the longitudinal direction L.

In a manufacturing process, first, each electrical terminal 40 for the wheel speed sensor is formed simultaneously, for example by stamping the same blank. At the time, the electrical terminals 40 are aligned in the longitudinal direction L and are spaced apart and connected to each other in the transverse direction A to facilitate subsequent operations (see Fig. 4a). Then, the intermediate holder 65 is attached at the body portion 42 of each electrical terminal 40, and the end portion holder 55 and the support 60 are attached near the first end 44 of each electrical terminal 40 (Fig. 4B). Generally, in an overmolding step, the end portion holder 55 and support 60 and the intermediate holder 65 are formed near the first end 44 of each electrical terminal 40 and on the body portion 42 at the same time, and then a mechanical connection 45 between the electrical terminals 40 is disconnected, so that no electrical connection is present between adjacent electrical terminals during practical use (Fig. 4c).

By attaching the end portion holder 55, the intermediate holder 65, and the support 60 by means of overmolding, the electrical terminals 40 can still be spaced apart and arranged in parallel in the transverse direction A after disconnection of the mechanical connection 45, aligned in the longitudinal direction L, and coplanar in a vertical direction T perpendicular to the transverse direction A and the longitudinal direction L, and each electrical terminal 40 is maintained stationary in position relative to each other, or is not moved or displaced relative to each other. In other words, the end portion holder 55 and the intermediate holder 65 are configured to prevent the respective electrical terminals 40 from having mutual displacement or movement, particularly when the dimension (length) of the elongated body portion 42 of the electrical terminal 40 in the longitudinal direction L is several times as much as the dimension thereof in the transverse direction A.

As shown in the figures, the end portion holder 55 has substantially the same structure as the intermediate holder 65. One end portion holder 55 is arranged near the weld end of each electrical terminal 40, thereby greatly enhancing the strength at the end of the electrical terminal 40. In particular, when performing welding between the first end 44 of the electrical terminal 40 and the pin 34 of the sensor chip 30, since the vicinity of the welding site is softened due to melting, it is particularly advantageous to further provide this end portion holder 55 to improve strength. The end portion holder 55 may be integrally formed with the support 60 or may be spaced apart therefrom. Meanwhile, the end portion holder 55 can further keep each end portion of each electrical terminal 40 stationary relative to each other during the welding operation described above, thereby ensuring that no electrical short occurs between the electrical terminals 40 during use.

The intermediate holder 65 is used to hold the body portions 42 of the electrical terminals 40 having a large length dimension together. Similar to the end portion holder 55, the intermediate holder 65 may include a holding body 52 and through holes formed in the holding body 52 that allow respective electrical terminals 40 to pass through.

The number of the intermediate holders 65 and an interval between adjacent intermediate holders 65 may be determined based on the length of the electrical terminal 40, for example, two as shown in the figure, and optionally, one, three, four or more intermediate holders 65 may be provided. As long as the above-described holding effect is achieved, the intermediate holder 65 may have any desired outer profile, size, number, shape or the like. In the illustrated embodiment, the intermediate holder 65 has an oval outer profile when viewed in a cross section perpendicular to the longitudinal direction L, i.e. the intermediate holder 65 circumferentially surrounds each electrical terminal 40. Any other suitable outer profile, such as a circular or polygonal shape, may also be conceived of.

The intermediate holder 65 may surround only a portion of the electrical terminal 40 in a circumferential direction. Optionally, in the vertical direction T perpendicular to both the longitudinal direction L and the transverse direction A, the intermediate holder 65 may be overmolded onto only one side of the electrical terminal 40, or overmolded onto two opposite sides thereof to surround the entire electrical terminal 40 as shown. For example, the intermediate holder 65 may be composed of two halves opposite to each other in the vertical direction T, the two halves being spaced apart and opposite to each other, and each covering a portion of the electrical terminal 40.

The material for forming the end portion holder 55, the intermediate holder 65 and the support 60 in the same step may be the same as the material for forming the sensor housing 10 (e.g., formed from plastic) or may be different therefrom. In addition, a hole 53 in the intermediate holder 65 as shown in the figure is an auxiliary hole used in the overmolding operation.

Returning to Figs. 2-5, the support 60 includes a chip mounting portion 70, a support portion 80, and an intermediate portion 90 for connecting the chip mounting portion 70 and the support portion 80. The chip mounting portion 70 defines a recess 72 for mounting each sensor chip 30. In the longitudinal direction L, the pin 34 of the sensor chip 30 passes through a channel 92 formed in the intermediate portion 90 and extends to contact with (including, but not limited to, overlapping or abutting) the first end 44 of the electrical terminal 40.

On the intermediate portion 90, a spacer portion 94 is formed between two channels 92 for receiving the pins 34 of the same sensor chip 30. The spacer portion 94, on the one hand, is used to ensure that the two pins 34 of the same sensor chip 30 are spaced apart from each other in the transverse direction A without causing an electrical short, and on the other hand, is used to hold each pin 34 in place after the sensor chip 30 and the pins 34 thereof are mounted in the recess 72 and the corresponding channels 92, particularly to fixedly hold the sensor chip 30 and the pins 34 thereof during a subsequent operation for welding the pins 34 to the first ends 44 of the electrical terminals 40.

Fixedly holding the pin 34 of the sensor chip 30 in the corresponding channel 92 may be performed by any suitable means. In the illustrated example, the spacer portion 94 includes two arms 96 extending from the intermediate portion 90 (Fig. 3). The two arms 96 extend away from the intermediate portion 90 (upward) by first bending outwardly away from each other and then bending inwardly toward each other, so that part of an outer profile of the two arms is in the shape of "O". By this configuration, after the pins 34 of the sensor chip 30 are mounted into the corresponding two channels 92, the spacer portion 94 (two arms 96 thereof) is pressed with force so as to be permanently deformed and be pressed onto respective portions of the two pins 34 of the sensor chip 30, thereby fixing the two pins 34 in place. In other embodiments, the curved arms 96 in the figure may be replaced with two arms that are linearly parallel to each other or extend obliquely relative to each other, and the same effect can be achieved.

In addition, those skilled in the art could have conceived of any structure capable of achieving the same effect by deforming or even breaking the spacer portion. Those skilled in the art could also have conceived of any means for deforming or breaking the spacer portion, including, but not limited to, deforming or breaking the spacer portion 94 by a force, and/or deforming, breaking, or melting the spacer portion 94 by heat. In addition, the spacer portion 94 is not limited to the form of two arms 96, and may be, for example, configured to be a block. The spacer portion may also be configured to be a portion extending from other sidewalls forming the corresponding channels 92, and the purpose for fixing the pins 34 of the sensor chip 30 in place is achieved by a force or heat as described above.

The support 60 further comprises lugs 75 respectively extending outwardly from two opposite sides of the support portion 80 in the transverse direction A. When the sensor housing 10 is overmolded onto the sensor body assembly, the lugs 75 of the support 60 are used to support, within the mold, the sensor body assembly that has been formed as an integral whole by welding or molding. The lug 75 comprises a sealing flange 85 arranged proximate to the support portion 80. The sealing flange 85 is an annular flange extending outwardly and surrounding the lug 75 in a plane perpendicular to the transverse direction A. Due to presence of the sealing flange 85, an inner surface of a corresponding portion of the sensor housing 10 which is subsequently formed on the sensor body assembly and the corresponding outer surface of the lug 75 of the support 60 form "labyrinth"-like opposing surface portions, and during use of the wheel speed sensor after being installed to the vehicle, the portions help to prevent debris, such as external water, moisture, small dirt or the like, from entering the inside of the wheel speed sensor via the above corresponding inner and outer surfaces and from affecting the accuracy of the wheel speed sensor.

In addition, more preferably, the lugs 75 of the support 60 are made of the same material as the sensor housing 10, so that the subsequently injection-molded sensor housing 10 can be integrally formed with the lugs 75 in a satisfactory manner, thereby facilitating sealing.

With reference to Fig. 3, the lug 75 of the support 60 includes a notch 77 recessed into the lug 75 from the outermost surface thereof in the transverse direction A, so that an operator can easily hand-hold the device during operation. The lug 75 of the support 60 further includes notches 79 recessed into the lug 75 from opposite side surfaces thereof in the longitudinal direction L, so that the sensor housing 10 subsequently formed thereon is securely attached to the sensor body assembly.

While particular implementations of the present application are described in detail herein, they are provided merely for illustrative purposes and should not be construed as limiting the scope of the present application. Further, it should be obvious to those skilled in the art that the embodiments described in the description may be used in combination with each other. Various substitutions, alterations, and modifications can be made without departing from the spirit and scope of the present application.

## Claims

1. A wheel speed sensor, comprising a sensor housing (10) and a sensor body assembly located inside the sensor housing (10), the sensor body assembly comprising:
one or more sensor chips (30), each sensor chip (30) comprising a pair of pins (34) spaced apart in a transverse direction (A);
one or more pairs of electrical terminals (40), each pair of electrical terminals (40) being electrically connected to the pair of pins (34) of the each sensor chip (30), each electrical terminal (40) comprising an elongated body portion (42) extending in a longitudinal direction (L) perpendicular to the transverse direction (A) and a first end (44) electrically connected to a corresponding pin;
a support (60) attached to the first end (44) of each electrical terminal (40), defining a recess (72) for mounting each of the one or more sensor chips (30), and providing support for a connection portion between the pin (34) of the sensor chip (30) and the first end (44) of the electrical terminal (40);
an end portion holder (55) adjacent to the support (60) and attached to each electrical terminal (40) to prevent displacement of each electrical terminal (40) relative to each other; and
at least one intermediate holder attached to the body portion (42) of each electrical terminal (40) to prevent displacement of the body portion (42) of each electrical terminal relative to each other.

2. The wheel speed sensor according to claim 1, wherein
the end portion holder (55) is integrally formed with or spaced apart from the support (60); and/or
the at least one intermediate holder (65) comprises only one intermediate holder or comprises a plurality of intermediate holders spaced apart in the longitudinal direction L.

3. The wheel speed sensor according to claim 2, wherein the end portion holder (55) and/or the intermediate holder (65) have an oval or polygonal outer profile when viewed in a cross section perpendicular to the longitudinal direction (L), and respectively include through holes allowing the respective electrical terminals to pass through, and when viewed in a cross section perpendicular to the transverse direction (A), each of the through holes completely surrounds a corresponding electrical terminal (40) or only wraps a portion of the corresponding electrical terminal (40).

4. The wheel speed sensor according to claim 3, wherein the intermediate holder (65) comprises two halves disposed opposite to each other, the through hole being defined collectively by the two opposite halves.

5. The wheel speed sensor according to claim 4, wherein the end portion holder (55) and support (60) are overmolded onto the first end (44) of the one or more pairs of electrical terminals, the intermediate holder (65) is overmolded onto the body portion (42), and the sensor housing (10) is overmolded onto the sensor body assembly.

6. The wheel speed sensor according to any one of claims 1 to 5, wherein the support (60) comprises a chip mounting portion (70) defining the recess (72), a support portion (80) providing the support, and an intermediate portion (90) connected between the chip mounting portion (70) and the support portion (80), the intermediate portion (90) comprises a pair of channels (92) allowing the pair of pins (34) of each sensor chip (30) to pass through, and a spacer portion (94) for spacing apart the pair of pins (34) and fixing the pair of pins (34) in place is arranged between the pair of channels (92) for each sensor chip (30).

7. The wheel speed sensor according to claim 6, wherein the spacer portion (94) is configured such that after the pin (34) of the sensor chip (30) is installed in the channel (92), the spacer portion is deformed or broken by force and/or heat so as to hold the pin (34) in place.

8. The wheel speed sensor according to claim 7, wherein the spacer portion (94) comprises two arms extending, in a bending or linear manner, from a sidewall defining the channel (92), or is configured to be a single block or arm extending from the sidewall defining the channel (92).

9. The wheel speed sensor according to any one of claims 1 to 5, wherein the support (60) further comprises lugs (75) extending in the transverse direction (A) from two opposite sides of the support portion (80) respectively, the lugs (75) passing through the sensor housing (10) and extending to the outside of the wheel speed sensor.

10. The wheel speed sensor according to claim 9, wherein the lug (75) comprises a sealing flange (885) extending outwardly from the lug (75) in a plane perpendicular to the transverse direction (A).
